# EUROPÄISCHE PATENTSCHRIFT

(11) **EP 2 323 799 B1**
(45) Veröffentlichungstag und Bekanntmachung des Hinweises auf die Patenterteilung: **03.10.2012**
(21) Anmeldenummer: 09776088.8
(22) Anmeldetag: 11.08.2009
(51) Int. Cl.: B23K 13/02, B23K 13/01, B23P 15/00

(54) **VERFAHREN ZUM VERBINDEN VON BAUTEILEN**
METHOD FOR JOINING COMPONENTS
PROCÉDÉ D'ASSEMBLAGE D'ÉLÉMENTS

(30) Priorität: 11.09.2008 DE 102008046742
(43) Veröffentlichungstag der Anmeldung: 25.05.2011
(73) Patentinhaber: MTU Aero Engines GmbH, 80995 München (DE)
(72) Erfinder: BAMBERG, Joachim, 85221 Dachau (DE); GINDORF, Alexander, 85247 Schwabhausen (DE); HANRIEDER, Herbert, 85411 Hohenkammer (DE)
(86) Internationale Anmeldenummer: PCT/DE2009/001141
(87) Internationale Veröffentlichungsnummer: WO 2010/028616

(56) Entgegenhaltungen:
- EP-A1- 0 753 359
- WO-A1-2004/012895
- DE-A1- 3 814 102

## Beschreibung

Die Erfindung betrifft ein Verfahren zum Verbinden von Bauteilen nach dem Oberbegriff des Anspruchs 1. Ein solches Verfahren ist in US 4 012 616 A schon bekannt.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle. Die wichtigsten, heutzutage für Flugtriebwerke oder sonstige Gasturbinen verwendeten Werkstoffe sind Titanlegierungen, Nickellegierungen und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile. Nickellegierungen sind für die heißen Teile des Flugtriebwerks geeignet. Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt.

Bei der Herstellung von z.B. integral beschaufelten Gasturbinenrotoren ist es erforderlich, Bauteile, die sich hinsichtlich ihres Werkstoffgefüges sowie ihrer Härte unterscheiden, miteinander zu verbinden. Das Verbinden solcher Teile erfolgt nach der Praxis in der Regel durch induktives Hochfrequenzpressschweißen, wobei beim induktiven Hochfrequenzpressschweißen miteinander zu verbindende Bauteile im Bereich von Fügeflächen der Bauteile induktiv erhitzt werden, um das Werlcstoffgefüge aufzuschmelzen, und wobei nach dem Aufschmelzen die miteinander zu verbindenden Bauteile durch Aufbringen einer Stauchkraft zusammengedrückt bzw. zusammengepresst werden. Insbesondere dann, wenn z.B. ein Gussbauteil mit einem Schmiedebauteil zu verbinden ist, wobei das Gussbauteil eine größere Härte als das Schmiedebauteil aufweist, bereitet es Schwierigkeiten, beim induktiven Hochfrequenzpressschweißen aufgeschmolzenen Werkstoff beim Zusammenpressen der Bauteile vollständig aus dem Fügebereich zu entfernen.

Dadurch können sich Korngrenzenanschmelzungen ausbilden, welche die sogenannte HCF-Festigkeit der Fügestelle negativ beeinträchtigen, da solche Korngrenzenanschmelzungen Ausgangspunkte für Mikrorisse sein können. Es besteht daher Bedarf an einem Verfahren zum Verbinden solcher Bauteile mit Hilfe von induktivem Hochfrequenzpressschweißen, bei welchem keine Gefahr besteht, dass sich im Bereich der Fügestelle Korngrenzenanschmelzungen ausbilden.

Als Stand der Technik, der induktives Hochfrequenzpressschweißen als Fügeverfahren für Gasturbinenbauteile offenbart, sei exemplarisch auf die DE 198 58 702 A1 verwiesen.

Hiervon ausgehend liegt der vorliegenden Erfindung das Problem zu Grunde, ein neuartiges Verfahren zum Verbinden von Bauteilen vorzuschlagen.

Dieses Problem wird durch ein Verfahren zum Verbinden von Bauteilen gemäß Anspruch 1 gelöst. Erfindungsgemäß wird die Fügefläche des ersten Bauteils, welches die im Vergleich zur zweiten Härte des zweiten Bauteils größere erste Härte aufweist, vor dem Fügen der beiden Bauteile ballig oder konisch oder konvex vorkonturiert.

Im Sinne der Erfindung wird das härtere Bauteil der miteinander zu verbindenden Bauteile im Bereich seiner Fügefläche ballig bzw. konisch bzw. konvex vorkonturiert, sodass mit dem Aufbringen der Presskraft beim induktiven Hochfrequenzpressschweißen eine vollständige Verdrängung des aufgeschmolzenen Werkstoffs aus dem Fügebereich der miteinander zu verbindenden Bauteile möglich ist. Somit können alle flüssigen Phasenanteile sicher aus dem Fügebereich entfernt werden, sodass sich im Fügebereich keine Korngrenzenanschmelzungen ausbilden können. Der Fügebereich zwischen den Bauteilen gleicht daher einem Schmiedegefüge, welches eine gute HCF-Festigkeit aufweist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

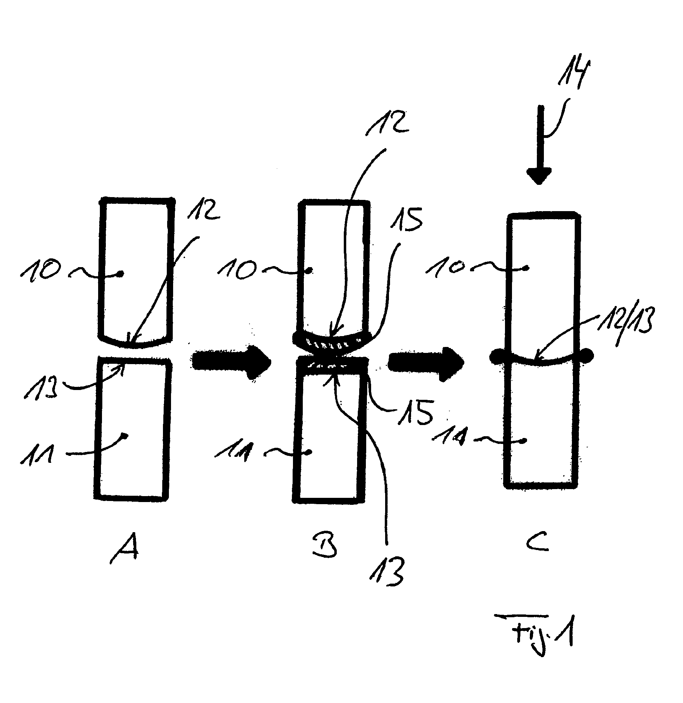

- Fig. 1: eine schematisierte Darstellung zur Verdeutlichung des erfindungsgemäßen Verfahrens zum Verbinden von zwei Bauteilen.

Die hier vorliegende Erfindung betrifft ein Verfahren zum Verbinden von Bauteilen, insbesondere von Gasturbinenbauteilen, wobei das erfindungsgemäße Verfahren nachfolgend unter Bezugnahme auf die schematisierte Darstellung der Fig. 1 im Detail beschrieben wird.

Fig. 1 zeigt stark schematisiert zwei miteinander zu verbindende Bauteile 10, 11 in unterschiedlichen Zuständen A, B und C, wobei es sich beim Bauteil 10 um ein Bauteil aus einem ersten Werkstoffgefüge mit einer ersten Härte und beim Bauteil 11 um ein Bauteil aus einem zweiten Werkstoffgefüge mit einer zweiten Härte handelt, wobei die zweite Härte des zweiten Werkstoffgefüges des Bauteils 11 kleiner ist als die erste Härte des ersten Werkstoffgefüges des Bauteils 10.

Die beiden Bauteile 10, 11 mit den unterschiedlichen Werkstoffgefügen bzw. Härten sollen im Sinne des erfindungsgemäßen Verfahrens durch induktives Hochfrequenzpressschweißen miteinander verbunden werden, wobei beim induktiven Hochfrequenzpressschweißen die beiden Bauteile 10, 11 im Bereich von Fügeflächen 12, 13 induktiv erhitzt werden, um im Bereich der Fügeflächen 12, 13 das Werkstoffgefüge aufzuschmelzen, wobei nach dem Aufschmelzen des Werkstoffgefüges im Bereich der Fügeflächen 12, 13 die beiden Bauteile 10, 11 durch Aufbringen einer Stauchkraft 14 zusammengedrückt bzw. zusammengepresst werden. Aufgeschmolzene Abschnitte des Werkstoffgefüges im Bereich der Fügeflächen 12, 13 sind im Zustand B der Fig. 1 durch die Bezugsziffer 15 gekennzeichnet. Wie dem Zustand A der Fig. 1 entnommen werden kann, wird im Sinne des erfindungsgemäßen Verfahrens die Fügefläche 12 des Bauteils 10, welches die im Vergleich zur zweiten Härte des Bauteils 11 größere erste Härte aufweist, vor dem Fügen der beiden Bauteile 10, 11 ballig oder konisch oder konvex vorkonturiert. Die Fügefläche 13 des Bauteils 11 hingegen, welches die im Bereich zur ersten Härte des Bauteils 10 kleinere zweite Härte aufweist, ist gemäß dem Zustand A der Fig. 1 eben vorkonturiert.

Die mit solchen Fügeflächen 12, 13 vorkonturierten Bauteile 10, 11 werden, wie bereits erwähnt, zum Aufschmelzen des Werkstoffgefüges im Bereich der Fügeflächen 12, 13 induktiv erhitzt (siehe Zustand B der Fig. 1), wobei anschließend gemäß dem Zustand C der Fig. 1 die Bauteile 10, 11 durch Aufbringen der Stauchkraft 14 zusammengedrückt bzw. zusammengepresst werden, wobei hierbei der aufgeschmolzene Werkstoff vollständig aus dem Fügebereich zwischen den Bauteilen 10, 11 herausgepresst wird.

Aus der Schweißzone der beiden Bauteile 10, 11 wird demnach der flüssige Phasenanteil vollständig entfernt, sodass keine Gefahr besteht, dass sich im Bereich der Fügezone bzw. Schweißzone die HCF-Festigkeit derselben negativ beeinträchtigende Komschmelzenangrenzungen ausbilden.

Beim Bauteil 10, welches die größere Härte aufweist, handelt es sich vorzugsweise um ein Bauteil aus einem einkristallinen Werkstoffgefüge oder aus einem gerichtet erstarrten Werkstoffgefüge, also um ein Gussteil. Beim Bauteil 11 hingegen, welches die kleinere Härte aufweist, handelt es sich vorzugsweise um ein Schmiedebauteil.

Beide miteinander zu verbindenden Bauteile 10, 11 bestehen vorzugsweise aus einem Nickelbasiswerkstoff, insbesondere aus einer Nickelbasislegierung. Es ist jedoch auch möglich, dass die miteinander zu verbindenden Bauteile 10, 11 aus Nickelbasislegierungen und/oder Titanbasislegierungen und/oder Kobaltbasislegierungen bestehen.

Die Fügeflächen 12, 13 der miteinander zu verbindenden Bauteile 10, 11 werden zumindest vor dem Aufbringen der Stauchkraft 14 induktiv erhitzt, um im Bereich der Fügeflächen 12, 13 das Werkstoffgefüge aufzuschmelzen. Nach einer vorteilhaften Weiterbildung der Erfindung kann vorgesehen sein, dass das induktive Erhitzen auch während des Aufbringens der Stauchkraft 14 und damit nach dem ersten mechanischen Kontakt der Fügeflächen 12, 13 aufrechterhalten wird.

Das erfindungsgemäße Verfahren findet vorzugsweise beim Herstellen von integral beschaufelten Gasturbinenrotoren Verwendung, also dann, wenn Laufschaufeln an einen Rotorgrundkörper durch induktives Hochfrequenzpressschweißen gefügt werden sollen. In diesem Fall ist es dann möglich, dass jede Laufschaufel ein Bauteil 10 bildet, welches die größere Härte aufweist, als ein Rotorgrundkörper, der dann das Bauteil 11 bereitstellt. Ebenso ist es aber möglich, dass in diesem Fall jede Laufschaufel das Bauteil 11 mit der geringeren Härte bildet, wobei es sich dann beim Rotorgrundkörper um das Bauteil 10 mit der größeren Härte handelt.

Beim Herstellen solcher integral beschaufelter Gasturbinenrotoren können die Laufschaufeln mit Hilfe des erfindungsgemäßen Verfahrens entweder unmittelbar bzw. direkt mit dem Rotorgrundkörper oder mittelbar bzw. indirekt unter Zwischenschaltung eines Adapters mit dem Rotorgrundkörper verbunden werden.

In diesem Fall werden zuerst die Adapter mit dem Rotorgrundkörper und anschließend die Laufschaufeln mit den Adaptern, die bereits auf dem Rotorgrundkörper befestigt sind, mit Hilfe des erfindungsgemäßen Verfahrens verbunden.

Mit Hilfe des erfindungsgemäßen Verfahrens kann ein fehlerfreies Werkstoffgefüge im Bereich einer Fügezone bzw. Schweißzone von miteinander zu verbindenden Bauteilen hergestellt werden, die sich hinsichtlich ihres Werkstoffgefüges und ihrer Härte unterscheiden. So kann im Bereich der Schweißzone bzw. Fügezone ein Schmiedegefüge ohne Kornschmelzenangrenzungen bereitgestellt werden, welches über eine hohe HCF-Festigkeit verfügt.

## Patentansprüche

1. Verfahren zum Verbinden von mindestens zwei Bauteilen, nämlich eines Güssbauteils, welches ein erstes Werkstoffgefüge mit einer ersten Härte aufweist, und eines welches ein zweites Werkstoffgefüge mit einer zweiten, im Vergleich zur ersten Härte kleineren zweiten Härte aufweist, durch induktives Hochfrequenzpressschweißen, wobei hierzu die beiden Bauteile im Bereich von Fügeflächen induktiv erhitzt und anschließend mit einer Stauchkraft zusammengedrückt werden, **dadurch gekennzeichnet, dass**
die Fügefläche des Güssbaüteils, welches die im Vergleich zur zweiten Härte des zweiten Bauteils größere erste Härte aufweist, vor dem Fügen der beiden Bauteile ballig oder konisch oder konvex vorkonturiert wird.

2. Verfahren nach Anspruch 1,
**dadurch gekennzeichnet, dass**
das Güssbaüteil ein einkristallines Werkstoffgefüge aufweist.

3. Verfahren nach Anspruch 1,
**dadurch gekennzeichnet, dass**
das Güssbaüteil ein gerichtet erstarrtes Werkstoffgefüge aufweist.

4. Verfahren nach einem der Ansprüche 1 bis 3,
**dadurch gekennzeichnet, dass**
das Güssbaüteil und das jeweils aus einer Nickbasiswerkstoffbestehen.

5. Verfahren nach einem der Ansprüche 1 bis 4,
**dadurch gekennzeichnet, dass**
die Fügefläche des, welches die im Vergleich zur ersten Härte des Güssbaüteils kleinere zweite Härte aufweist, vor dem Fügen der beiden Bauteile eben vorkonturiert wird.

6. Verfahren nach einem der Ansprüche 1 bis 5,
**dadurch gekennzeichnet, dass**
vor und während des Aufbringens der Stauchkraft beide Bauteile im Bereich der Fügeflächen induktiv erhitzt werden.

7. Verfahren nach einem der Ansprüche 1 bis 6,
**dadurch gekennzeichnet, dass**
zum Herstellung eines integral beschaufelten Gasturbinenrotors Laufschaufeln an einen Rotorgrundkörper gefügt werden, wobei jede der Laufschaufeln ein Güssbaüteil, welches die im Vergleich zur zweiten Härte des größere erste Härte aufweist, bildet, und wobei der Rotorgrundkörper das, welches die im Vergleich zur ersten Härte des Güssbaüteils kleinere zweite Härte aufweist, bildet.

8. Verfahren nach einem der Ansprüche 1 bis 6,
**dadurch gekennzeichnet, dass**
zum Herstellung eines integral beschaufelten Gasturbinenrotors Laufschaufeln an einen Rotorgrundkörper gefügt werden, wobei jede der Laufschaufeln ein das im Vergleich zur ersten Härte des Güssbaüteils kleinere zweite Härte aufweist, bildet, und wobei der Rotorgrundkörper das Güssbaüteil, welches die im Vergleich zur zweiten Härte des Schmiedebaüteils größere erste Härte aufweist, bildet.

## Claims

1. Method for connecting at least two components, namely a cast component which has a first material structure with a first hardness and a forged component which has a second material structure with a second hardness that is less than the first hardness, by inductive highfrequency pressure-welding, wherein for this the two components are heated inductively in the region of joining surfaces and are subsequently pressed together with a compressive force,
**characterised in that**
the joining surface of the cast component which has the first hardness that is greater than the second hardness of the second component is pre-contoured in a spherical or conical or convex manner before the two components are joined.

2. Method according to claim 1,
**characterised in that**
the cast component has a monocrystalline material structure.

3. Method according to claim 1,
**characterised in that**
the cast component has a directionally solidified material structure.

4. Method according to one of claims 1 to 3,
**characterised in that**
the cast component and the forged component each consist of a nickel-based material.

5. Method according to one of claims 1 to 4,
**characterised in that**
the joining surface of the forged component, which has the second hardness that is less than the first hardness of the cast component, is pre-contoured in a planar manner before the two components are joined.

6. Method according to one of claims 1 to 5,
**characterised in that**
before and during the application of the compressive force both components are heated inductively in the region of the joining surfaces.

7. Method according to one of claims 1 to 6,
**characterised in that**
in order to produce an integrally bladed gas turbine rotor, rotor blades are joined to a rotor base body, wherein each of the rotor blades constitutes a cast component which has the first hardness that is greater than the second hardness of the forged component, and wherein the rotor base body constitutes the forged component which has the second hardness that is less than the first hardness of the cast component.

8. Method according to one of claims 1 to 6,
**characterised in that**
in order to produce an integrally bladed gas turbine rotor, rotor blades are joined to a rotor base body, wherein each of the rotor blades constitutes a forged component which has the second hardness that is less than the first hardness of the cast component, and wherein the rotor base body constitutes the cast component which has the first hardness that is greater than the second hardness of the forged component.

## Revendications

1. Procédé d'assemblage par soudage par induction à haute fréquence d'au moins deux éléments, à savoir un élément en fonte, lequel présente une première structure matérielle d'une première dureté, et un élément forgé qui présente une deuxième structure matérielle d'une deuxième dureté, en comparaison inférieure à la première dureté, procédé dans lequel on chauffe par induction, à cet effet, les deux éléments au niveau des surfaces d'assemblage puis on les presse l'un contre l'autre avec une force de compression,
**caractérisé en ce qu'**
on rend le pré-contour de la surface d'assemblage de l'élément en fonte qui présente, en comparaison, la première dureté supérieure à la deuxième dureté du deuxième élément, bombé ou conique ou convexe, avant l'assemblage des deux éléments.

2. Procédé selon la revendication 1,
**caractérisé en ce que**
l'élément en fonte a une structure matérielle monocristalline.

3. Procédé selon la revendication 1,
**caractérisé en ce que**
l'élément en fonte a une structure matérielle figée dans un sens.

4. Procédé selon l'une quelconque des revendications 1 à 3,
**caractérisé en ce que**
l'élément en fonte et l'élément forgé sont chacun constitués d'une matière à base de nickel.

5. Procédé selon l'une quelconque des revendications 1 à 4,
**caractérisé en ce qu'**
on rend le pré-contour de la surface d'assemblage de l'élément forgé, lequel présente, en comparaison, la deuxième dureté inférieure à la première dureté de l'élément en fonte, plan avant l'assemblage des deux éléments.

6. Procédé selon l'une quelconque des revendications 1 à 5,
**caractérisé en ce qu'**
on chauffe les deux éléments par induction au niveau des surfaces d'assemblage avant et pendant l'application de la force de compression.

7. Procédé selon l'une quelconque des revendications 1 à 6,
**caractérisé en ce que**,
pour fabriquer une rotor de turbine à gaz à aubes intégrales, on assemble des aubes sur un corps de rotor, chaque aube formant un élément en fonte qui présente, en comparaison, une première dureté supérieure à la deuxième cureté de l'élément forgé et dans lequel le corps de rotor forme l'élément forgé, lequel présente, en comparaison, la deuxième dureté inférieure à la première dureté de l'élément en fonte.

8. Procédé selon l'une quelconque des revendications 1 à 6,
**caractérisé en ce que**,
pour fabriquer un rotor de turbine à gaz à aubes intégrales, on assemble des aubes sur un corps de rotor, chaque aube formant un élément forgé qui présente, en comparaison, une deuxième dureté inférieure à la première dureté de l'élément en fonte et dans lequel le corps de rotor forme l'élément en fonte, lequel présente, en comparaison, la première dureté supérieure à la deuxième dureté de l'élément forgé.
